# EUROPÄISCHE PATENTSCHRIFT

(11) **EP 1 527 413 B1**
(45) Veröffentlichungstag und Bekanntmachung des Hinweises auf die Patenterteilung: **04.10.2006**
(21) Anmeldenummer: 03771089.4
(22) Anmeldetag: 24.07.2003
(51) Int. Cl.: G06K 19/077

(54) **DATENTRÄGER MIT TRANSPONDERSPULE**
DATA SUPPORT WITH TRANSPONDER COIL
SUPPORT DE DONNEES AVEC SOLENOIDE DE TRANSPONDEUR

(30) Priorität: 25.07.2002 DE 10233927
(43) Veröffentlichungstag der Anmeldung: 04.05.2005
(73) Patentinhaber: Giesecke & Devrient GmbH, 81677 München (DE)
(72) Erfinder: FINKENZELLER, Klaus, 80939 München (DE)
(74) Vertreter: Klunker . Schmitt-Nilson . Hirsch
(86) Internationale Anmeldenummer: PCT/EP2003/008134
(87) Internationale Veröffentlichungsnummer: WO 2004/012138

(56) Entgegenhaltungen:
- EP-A- 1 291 818
- DE-A- 10 000 090
- DE-A- 19 811 578
- DE-C- 4 428 732
- US-A- 4 369 557
- US-A- 4 658 264

## Beschreibung

Die Erfindung betrifft einen mehrschichtigen elektronischen Datenträger mit mindestens einer Transponderspule für den kontaktlosen Daten- und/ oder Energietransfer, ein Verfahren zu dessen Herstellung und dessen Verwendung insbesondere als Ausweis.

Mehrschichtige elektronische Datenträger mit Transponderspule zur kontaktlosen Datenübertragung dienen beispielsweise als Kreditkarte, Scheckkarte, Ausweiskarte aber auch als Fahrkarte, Eintrittskarte, Sicherheitsetikett, Sicherheitsanhänger und dergleichen. Eine oder mehrere innere Schichten des Datenträgers tragen elektronische Bauteile wie Chip, Transponderspule, etc. sowie diese Bauteile verbindende Leiterbahnen. Die elektronischen Bauteile der inneren Schichten werden durch äußere Deckschichten gegen Umwelteinflüsse geschützt. Die Deckschichten können zum Beispiel bedruckt und/ oder eingefärbt sein und Aussparungen für den zusätzlichen kontaktbehafteten Datentransfer unmittelbar mit einem in dem Datenträger enthaltenen Chip aufweisen.

Der Zusammenhalt des Schichtverbunds kann auf unterschiedlichste Weise sichergestellt werden. Üblicherweise werden die einzelnen Schichten im Heißlaminierverfahren unter Einsatz von Druck und Temperatur oder im Kaltlaminierverfahren mittels eines Klebers oder einer Kombination aus diesen Verfahren miteinander verbunden. Die inneren Schichten mit den elektronischen Bauteilen werden in der Regel als separates "Inlett" vorgefertigt und anschließend in geeigneter Weise mit weiteren Schichten zum fertigen Datenträger weiterverarbeitet. Andererseits kann das Inlett beispielsweise auch umspritzt werden.

Im Sinne der vorliegenden Erfindung kann ein "Inlett" bereits als "Datenträger" zu verstehen sein, auch wenn es nur als Halbzeug für die Herstellung des endgültigen Datenträgers dient.

Die WO-00/ 13140 beschreibt ein Inlett in Form einer Trägerfolie mit mehreren Chips, Leiterbahnverbindungen und einem Kontaktfeld für einen kontaktbehafteten Datentransfer. Das Kontaktfeld ist über einer Aussparung auf derselben Seite der Trägerfolie angeordnet wie die Leiterbahnen, mit denen das Kontaktfeld, die Chips und weitere elektronische Bauteile untereinander verbunden sind. Die Trägerfolie ist so gefaltet, dass die Leiterbahnen und das Kontaktfeld auf der Innenseite der gefalteten Folie übereinander liegen, wobei das Kontaktfeld durch die Aussparung hindurch von außen zugänglich ist. Dadurch wird einerseits in einfacher Weise eine exakte Positionierung der einzelnen elektronischen Bauteile in unterschiedlichen Ebenen übereinander erzielt, und andererseits können das Kontaktfeld und die Leiterbahnen in einem gemeinsamen Herstellungsschritt auf die Trägerfolie aufgebracht werden. Das Kontaktfeld ist mit den Chips entweder über die Leiterbahnen verbunden, die demzufolge im Bereich der Faltlinie mitgefaltet werden, oder das Kontaktfeld wird mittels elektrisch leitfähigem Kleber oder verformbaren Leiterbahnen an die dem Kontaktfeld gegenüberliegenden Leiterbahnen angeschlossen. Zur Vermeidung von Kurzschlüssen sind eine oder beide nach innen weisenden Trägerfolienoberflächen mit einem isolierenden Lack beschichtet. Alternativ kann eine separate Isolierschicht zwischen die gefaltete Trägerfolie eingelegt werden. Die gefaltete Trägerfolie wird anschließend je nach Anwendungszweck mit einem stabilen Träger verbunden oder in ein Gehäuse eingesetzt, um den fertigen Datenträger herzustellen.

Die DE 44 28 732 C1 bezieht sich auf ein Verfahren zur Anordnung von Spulen zum Zwecke der Erhöhung ihrer Induktivität in Chipkarten. Auf einem Träger werden hierzu zwei Spulen angeordnet, die nach Faltung des Trägers übereinander angeordnet sind. Kontaktflächen der Spulen können mittels leitfähigem und fließfähigem Material, welches in Löcher eingebracht wird, elektrisch miteinander verbunden werden. Nachteilig hieran ist der zusätzliche Arbeitsschritt, mit dem das leitfähige Material paßgenau in die dazu vorgesehen Löcher eingebracht werden muß.

Aus der DE 100 00 090 A1 ist ein Verfahren zum Herstellen einer mehrlagigen Planarspule zur Montage auf einen Spulenkern oder ein Transformatorblech bekannt. Die Planarspule wird durch Aufeinanderfalten oder Aufeinanderstapeln von Spulenstrukturen, die auf einem Grundkörper aufgebracht sind, hergestellt. Zur Vermeidung von Kurzschlüssen werden die Spulenstrukturen mit einem isolierenden Lack bestrichen, wobei Kontaktflächen ausgespart bleiben.

Das Dokument DE 198 11 578 A1, gegen das die Ansprüche abgegrezt sind, zeigt einen mehrschichtigen elektronischen Datenträger bei dem Leiterbahnen auf einem Träger angeordnet und über einen Zwischenraum mit einem Distanzkern durch leitendes Material miteinander verbunden sind.

Nachteilig an dem Stand der Technik ist der komplexe Aufbau, der die Bereitstellung eines zusätzlichen Bauteils zur Isolierung der Spulen erfordert.

Aufgabe der vorliegenden Erfindung ist es daher, einen mehrschichtigen elektronischen Datenträger mit mindestens einer Transponderspule für den kontaktlosen Datenträger- und/ oder Energietransfer zur Verfügung zu stellen, bei dem die Herstellung der Transponderspule möglichst wenig separat durchzuführende Verfahrensschritte erfordert.

Diese Aufgabe wird durch einen Datenträger, ein Halbzeug und ein Verfahren zur Herstellung eines Datenträgers mit den Merkmalen der unabhängigen Ansprüche gelöst. In davon abhängigen Ansprüchen sind vorteilhafte Ausgestaltungen und Weiterbildungen der Erfindung angegeben.

Die Erfindung basiert darauf, dass eine Brückenbildung bei der Herstellung der Transponderspule einfach realisierbar ist, wenn die Spule in geeigneter Weise zumindest zweiteilig auf derselben Oberfläche einer Trägerschicht ausgebildet wird. Die Trägerschicht kann dann so gefaltet werden, dass die beiden Teile der Spule auf einander gegenüberliegenden Innenseiten der gefalteten Trägerschicht liegen. Die beiden Spulenteile lassen sich in dieser Konstellation durch den durch die Faltung erzeugten Zwischenraum hindurch in einfacher Weise kontaktieren. Wenn die zu kontaktierenden Enden der beiden Spulenteile entsprechend nahe beieinanderliegen und geeignet ausgebildet sind, zum Beispiel als hochgebogene Kontaktlaschen und/oder als aufgesetzte Kontaktpille und/oder besonders großflächig, kann auf zusätzliche Kontaktierungsmaßnahmen gegebenenfalls vollständig verzichtet werden.

Demzufolge reicht ein einziger Druck- bzw. Ätzvorgang aus, um die gesamte Transponderspule zu erzeugen. Insbesondere ist es nicht erforderlich, die Transponderspule mittels einer separaten Brücke zu schließen, denn dies geschieht in einfacher Weise durch den Faltvorgang.

Alternativ oder zusätzlich zu dem vorbeschriebenen Berührungskontakt zwischen den Enden der beiden Spulenteile kann auch ein elektrisch leitender Kontaktkleber eingesetzt werden. Dadurch ist eine zuverlässige elektronische Kontaktierung der beiden Spulenenden unabhängig von ihrer individuellen Ausbildung realisierbar. Durch eine entsprechend große Klebefläche wird ein Kontakt auch dann hergestellt, wenn die zu kontaktierenden Spulenenden nicht exakt übereinander liegen.

Allerdings kreuzen sich die übereinander liegenden Spulenteile zumindest an einer Stelle, die daher vor dem Falten isoliert werden sollte, um eine Kurzschlussbildung zu vermeiden.

Dazu wird gemäß einer ersten bevorzugten Ausführungsform der Erfindung eine isolierende Zwischenschicht so zwischen die gefaltete Trägerschicht platziert, dass zumindest die Kontaktzone für die Kontaktierung der beiden Spulenteile frei bleibt. Vorteilhafterweise wird die Zwischenschicht durch einen Teil der Trägerschicht selbst gebildet und auf das erste Spulenteil geklappt, bevor das zweite Spulenteil darüber gefaltet wird. Da bei der Herstellung des Datenträgers ohnehin eine Faltung notwendig ist, wird das Herstellungsverfahren durch die zusätzliche Faltung der Zwischenschicht auf das erste Spulenteil nicht wesentlich aufwändiger.

Gemäß einer zweiten bevorzugten Ausführungsform werden zumindest die einander kreuzenden Spulenabschnitte wenigstens eines der beiden Spulenteile mit einem Schutzlack abgedeckt, bevor die beiden Spulenteile übereinander gefaltet werden. Es kann auch das gesamte Spulenteil mit dem Schutzlack abgedeckt werden. Diese Maßnahme zur Vermeidung einer Kurzschlussbildung ist ebenfalls nicht sehr aufwändig und kann insbesondere gleichzeitig mit der Kontaktkleberaufbringung erfolgen.

Die Zwischenschicht und die Schutzlackschicht können auch beliebig miteinander kombiniert werden.

Die beiden Spulenteile können auf der Trägerschicht elektrisch völlig voneinander getrennt angeordnet sein. In diesem Falle werden die beiden Spulenteile, nachdem sie durch Falten der Trägerschicht übereinanderliegen, an zwei unterschiedlichen Stellen miteinander kontaktiert, um die Transponderspule zu schließen. Eine vorteilhafte Ausgestaltung der Erfindung sieht jedoch vor, dass eine der beiden Kontaktstellen zugunsten einer auf der Oberfläche der Trägerschicht verlaufenden Leiterbahn entfallen kann, über die die beiden Spulenteile unmittelbar miteinander verbunden sind. Das Herstellungsverfahren wird dadurch insoweit vereinfacht, als der Aufwand für zumindest eine Kontaktierung entfällt.

Die auf der Oberfläche verlaufende Leiterbahn durchläuft zwangsläufig die Faltkante und kann daher beim Falten brechen. Um dennoch einen zuverlässigen Kontakt zu gewährleisten, ist es vorteilhaft, diesen Teil der Leiterbahn rechtwinklig zur Faltkante und/ oder besonders breit auszubilden. In diesem Fall ergibt sich ein flächiger Berührungskontakt der übereinanderliegenden Abschnitte dieses Leiterbahnteils.

Die gefaltete Trägerschicht ist besonders geeignet als Inlett in einem der eingangs genannten Datenträger wie Kreditkarte, Scheckkarte, Ausweiskarte und dergleichen. Die Trägerschicht kann entweder eine Kunststofffolie oder ein Papier- oder Pappsubstrat sein. Die Trägerschicht wird vorzugsweise dann als Papier- oder Pappsubstrat ausgeführt, wenn Fahrkarten, Eintrittskarten, Sicherheitsetiketten, Sicherheitsanhänger oder papierene Personalausweise oder Reisepässe daraus hergestellt werden. Bei diesen Gegenständen ist der Verbraucher an den Einsatz von papierenem Material gewöhnt, so dass sich ein weiteres Einbetten der gefalteten Trägerschicht zwischen weitere Schutzschichten erübrigt. Dann bildet die gefaltete Trägerschicht mit den dazwischen liegenden elektronischen Bauteilen bereits den fertigen Datenträger. Die gefaltete Trägerschicht kann in diesen Fällen mittels einer geeignet ausgebildeten Kleberschicht vollständig oder teilweise so verklebt werden, dass ein unautorisiertes Aufklappen der Trägerschicht zuverlässig verhindert wird.

Nachfolgend wird die Erfindung beispielhaft anhand der begleitenden Zeichnungen beschrieben. Darin zeigen:
- Fig.1: eine Trägerschicht mit Transponderspule gemäß einer ersten Ausführungsform,
- Fig. 2: die Faltweise der Trägerschicht aus Fig. 1,
- Fig. 3: die auf sich selber gefaltete Trägerschicht aus Fig. 1,
- Fig. 4: eine Trägerschicht mit Transponderspule gemäß einer zweiten Ausführungsform,
- Fig. 5: die auf sich selber gefaltete Trägerschicht aus Fig. 4, und
- Fig. 6: eine Trägerschicht mit Transponderspule gemäß einer dritten Ausführungsform.

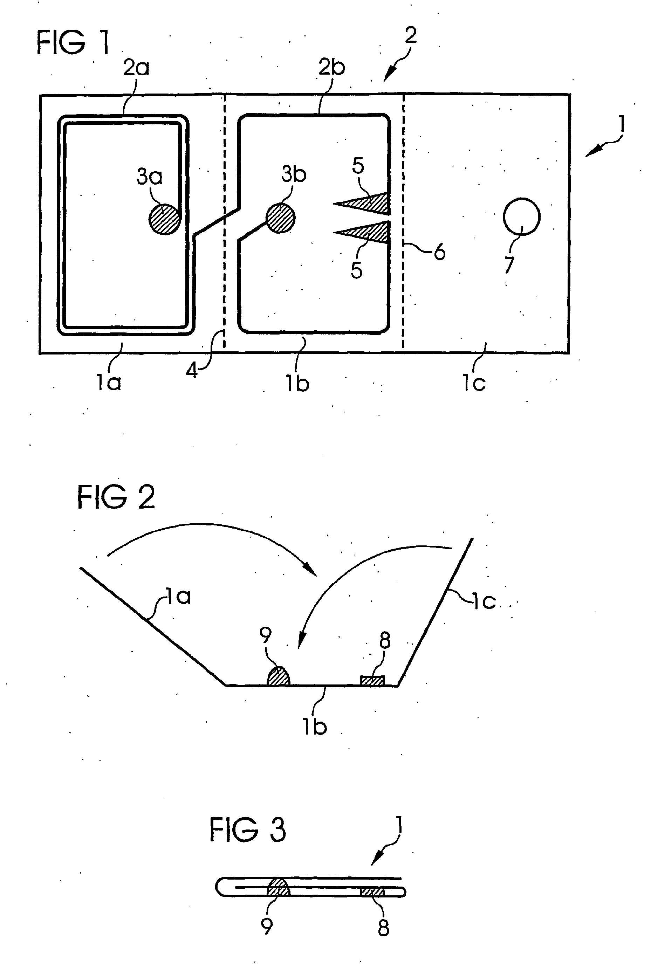

Fig. 1 zeigt in Draufsicht eine Trägerschicht 1 mit einer Transponderspule 2, die in bekannter Weise auf die Trägerschicht 1 in einem Druckverfahren oder einem Ätzverfahren aufgebracht ist. Die Transponderspule 2 besteht aus einem ersten Spulenteil 2a und einem zweiten Spulenteil 2b mit jeweils einer Kontaktzone 3a bzw. 3b. Die beiden Kontaktzonen 3a, 3b kommen übereinander zu liegen, wenn die Trägerschicht 1 entlang der gedachten, punktiert dargestellten Faltlinie 4 auf sich selbst gefaltet wird. Eine der beiden Spulenteile 2a, 2b, im dargestellten Fall das zweite Spulenteil 2b, weist darüber hinaus Kontaktanschlüsse 5 auf zum Anschließen eines elektronischen Bauteils, insbesondere eines Chips, an die Transponderspule 2.

Die Trägerschicht 1 besteht aus einem isolierenden Material, vorzugsweise aus einer faltbaren Kunststofffolie oder Papier- oder Papplage. Die Faltlinie 4 kann gelocht oder dünner ausgebildet sein, um den Faltvorgang zu erleichtem.

Die Trägerschicht 1 gliedert sich somit in eine erste Zone 1a mit dem ersten Spulenteil 2a und eine zweite Zone 1b mit dem zweiten Spulenteil 2b sowie darüber hinaus in eine dritte Zone 1c. Die dritte Trägerschichtzone 1c dient als Isolierschicht. Sie wird entlang einer zweiten Faltlinie 6 auf das zweite Spulenteil 2b geklappt, bevor die erste Trägerschichtzone 1a mit dem ersten Spulenteil 2a darüber gefaltet wird, um einen Kurzschluss zwischen sich kreuzenden Teilen der übereinander gefalteten Spulenteile 2a, 2b zu verhindern. Lediglich durch eine Aussparung 7 in der dritten Trägerschichtzone 1c ist eine Kontaktierung der beiden Spulenteile 2a, 2b im gefalteten Zustand der Trägerschicht 1 möglich. Die Aussparung 7 ist so in die dritte Trägerschichtzone 1c gestanzt, dass sie im gefalteten Zustand der Trägerschicht 1 genau zwischen den Kontaktzonen 3a, 3b der beiden Spulenteile 2a, 2b zu liegen kommt.

In Fig. 2 ist in Seitenansicht die Faltsequenz der ersten und dritten Trägerschichtzonen 1a, 1c auf die zweite Trägerschichtzone 1b mit Pfeilen angedeutet. Zunächst wird die als Isolierschicht fungierende dritte Trägerschichtzone 1c auf die zweite Trägerschichtzone 1b geklappt, und anschließend wird die erste Trägerschichtzone 1a auf die isolierende Trägerschichtzone 1c gefaltet.

Zuvor wird an die Kontaktanschlüsse 5 des zweiten Spulenteils 2b auf der zweiten Trägerschichtzone 1b das elektronische Bauteil bzw. Chip 8 in herkömmlicher Weise mittels Wirebonds oder als Flipchip elektrisch leitend kontaktiert. Das elektronische Bauelement stellt somit funktional gesehen einen Bestandteil des zweiten Spulenteils dar, da das zweite Spulenteil ansonsten an dieser Stelle unterbrochen wäre. Darüber hinaus wird auf die Kontaktzone 3b des zweiten Spulenteils 2b eine Kontaktpille 9 aufgesetzt, um einen zuverlässigen Berührungskontakt zwischen den Kontaktzonen 3a und 3b im zusammengefalteten Zustand der Trägerschicht 1 zu gewährleisten. Alternativ kann anstelle der Kontaktpille auch ein Kontaktklebertropfen in der erforderlichen Menge auf die Kontaktzone 3b aufgetragen werden. Selbstverständlich können die Kontaktpille bzw. der Kontaktkleber 9 statt dessen oder zusätzlich auch auf der Kontaktzone 3a des ersten Spulenteils 2a vorgesehen werden.

Fig. 3 zeigt in Seitenansicht die auf sich selbst gefaltete Trägerschicht 1 mit dem darin eingeschlossenen Chip 8 und der die ersten und zweiten Spulenteile 2a, 2b elektrisch verbindenden Kontaktpille bzw. Kontaktkleber 9.

Die Trägerschicht 1 kann entlang ihrer Außenkante mit einem Kleber versehen werden, bevor die Trägerschichtzonen aufeinander gefaltet werden, um einen festen Verbund der aufeinandergefalteten Trägerschichtzonen zu erhalten. Unter Umständen kann es ausreichen, wenn lediglich die erste Trägerschichtzone 1a entlang ihren Außenkanten mit dem Kleber versehen wird.

Die in Fig. 3 gezeigte, auf sich selbst gefaltete Trägerschicht 1 kann als fertiger Datenträger verwendet werden, kann aber auch als Inlett zur Weiterverarbeitung zu einem fertigen Datenträger dienen. In jedem Falle ist es möglich, die Trägerschicht 1 zu bedrucken, so dass sie im zusammengefalteten Zustand (Fig. 3) von beiden Seiten ein individuelles, dem gewünschten Verwendungszweck entsprechendes Erscheinungsbild besitzt. Dazu wird die Trägerschicht 1 auf der der Transponderspule 2 gegenüberliegenden Oberfläche bedruckt, bevor ein elektrisches Bauteil 8 an die Kontaktanschlüsse 5 angeschlossen wird. Anstelle der lediglich zwei Faltlinien 4 und 6 im dargestellten Ausführungsbeispiel kann die Trägerschicht 1 auch weitere Faltlinien aufweisen, insbesondere wenn zusätzliche elektronische Bauteile und/ oder weitere Transponderspulen in den Datenträger auf derselben Trägerschicht 1 integriert werden sollen.

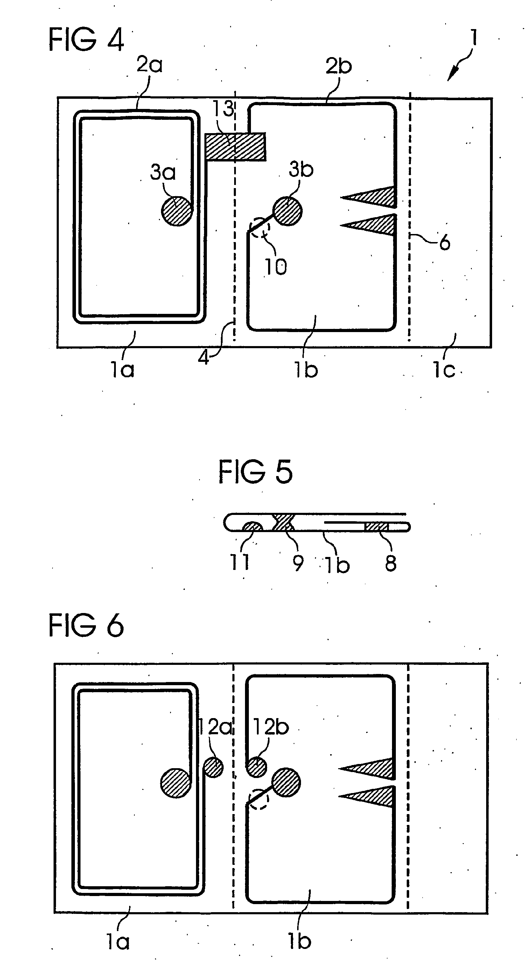

Fig. 4 zeigt eine zweite Ausführungsform, welche sich von der Ausführungsform gemäß Fig. 1 dadurch unterscheidet, dass die dritte Trägerschichtzone 1c kürzer ausgebildet ist. Im zusammengefalteten Zustand isoliert die dritte Trägerschichtzone 1c daher lediglich den Chip 8 gegenüber dem ersten Spulenteil 2a der ersten Trägerschichtzone 1a (Fig. 5). Im übrigen sind die ersten und zweiten Spulenteile 2a, 2b so ausgeführt, dass die Windungen des ersten Spulenteils 2a im gefalteten Zustand der Trägerschicht 1 innerhalb der Windungen des zweiten Spulenteils 2b liegen. Lediglich an einer Stelle 10 kreuzen sich die übereinanderliegenden ersten und zweiten Spulenteile 2a, 2b im gefalteten Zustand der Trägerschicht 1. Zumindest diese Kreuzungsstelle 10 wird daher mit einer Schutzlackschicht 11 abgedeckt, um einen Kurzschluss zwischen den beiden Spulenteilen 2a, 2b zuverlässig zu vermeiden (Fig. 5).

Darüber hinaus ist die beide Spulenteile 2a, 2b verbindende Leiterbahn 13 einerseits besonders breit und andererseits rechtwinklig zur Faltlinie 4 ausgebildet. Dadurch entsteht nach dem Falten ein großflächiger Berührungskontakt zwischen den übereinanderliegenden Abschnitten der Leiterbahn 13, so dass eine leitende Verbindung auch dann gewährleistet bleibt, wenn die Leiterbahn 13 beim Falten brechen sollte. Zusätzlich kann die Leiterbahn 13 mit einem elektrisch leitenden Kleber versehen werden.

In Fig. 5 ist die Schutzlackschicht 11 an der Kreuzungsstelle 10 auf der zweiten Trägerschichtzone 1b vorgesehen. Statt dessen oder gegebenenfalls auch zusätzlich kann die Schutzlackschicht an der entsprechenden Stelle der ersten Trägerschichtzone 1a vorgesehen werden. Insbesondere ist es auch möglich, nach Einbau des Chips 8 die gesamte Trägerschichtzone, vorzugsweise die erste Trägerschichtzone vollständig mit einer Schutzlackschicht zu überziehen. Dann kann auf die dritte Trägerschichtzone 1c vollständig verzichtet werden. Dadurch wird nicht nur ein Faltschritt eingespart, sondern die Gesamtdicke der gefalteten Trägerschicht 1 reduziert sich entsprechend. Die Dicke der gefalteten Trägerschicht 1 wird dann im wesentlichen von der Dicke des eingesetzten Chips 8 bestimmt. Je dünner der Chip 8 ist, desto dünner wird die Gesamtanordnung. Dasselbe gilt allerdings genauso für alle anderen beschriebenen Ausführungsformen.

Selbstverständlich kann das Auftragen eines isolierenden Schutzlacks auch vor dem Einsetzen des Chips 8 erfolgen. In diesem Fall ist darauf zu achten, daß die Kontaktanschlüsse 5 bei der Lackierung ausgespart bleiben.

Fig. 6 zeigt eine dritte Ausführungsform. Im Gegensatz zu den zuvor beschriebenen Ausführungsformen sind die ersten und zweiten Spulenteile 2a, 2b im ungefalteten Zustand der Trägerschicht 1 nicht elektrisch leitend miteinander verbunden. Statt dessen sind zwei weitere Kontaktzonen 12a, 12b vorhanden, die durch Übereinanderfalten der ersten und zweiten Trägerschichtzonen 1a, 1b in derselben Weise miteinander kontaktiert werden, wie dies zuvor im Zusammenhang mit den Kontaktzonen 3a, 3b erläutert wurde.

## Patentansprüche

1. Halbzeug zur Herstellung eines Datenträgers umfassend eine Trägerschicht (1) mit einer Oberfläche, auf der zumindest zwei Spulenteile (2a, 2b) einer Transponderspule (2) angeordnet sind, wobei die Trägerschicht (1) derart gefaltet ist, dass die beiden Spulenteile (2a, 2b) auf einander gegenüberliegenden Innenseiten der gefalteten Trägerschicht 1 liegen, wobei die beiden Spulenteile durch einen durch die Faltung gebildeten Zwischenraum hindurch miteinander kontaktiert sind, **dadurch gekennzeichnet, dass** eine separate isolierende Zwischenschicht (1c) durch einen Teil der Trägerschicht (1) gebildet wird, der zwischen die gefaltete Trägerschicht (1) geklappt ist.

2. Mehrschichtiger elektronischer Datenträger enthaltend ein Halbzeug nach Anspruch 1, mit mindestens einer Transponderspule (2) für den kontaktlosen Daten- und/oder Energietransfer, umfassend eine Trägerschicht (1) mit einer Oberfläche, auf der zumindest zwei Spulenteile (2a, 2b) der Transponderspule (2) angeordnet sind, wobei die Trägerschicht (1) derart gefaltet ist, dass die beiden Spulenteile (2a, 2b) auf einander gegenüberliegenden Innenseiten der gefalteten Trägerschicht (1) liegen und die beiden Spulenteile (2a, 2b) durch den durch die Faltung gebildeten Zwischenraum hindurch miteinander kontaktiert sind, **dadurch gekennzeichnet, dass** eine separate isolierende Zwischenschicht (1c) durch einen Teil der Trägerschicht (1) gebildet wird, der zwischen die gefaltete Trägerschicht (1) geklappt ist.

3. Datenträger nach Anspruch 2, **dadurch gekennzeichnet, dass** die beiden einander gegenüberliegenden Spulenteile (2a, 2b) jeweils mindestens eine Kontaktzone (3a bzw. 3b) aufweisen, die mit einer Kontaktzone (3b bzw. 3a) des jeweils anderen Spulenteils einen Berührungskontakt herstellen.

4. Datenträger nach Anspruch 2 oder 3, **dadurch gekennzeichnet, dass** die beiden einander gegenüberliegenden Spulenteile (2a, 2b) mindestens eine Kontaktzone (3a bzw. 3b) aufweisen, die mit einer Kontaktzone des jeweils anderen Spulenteils (3b bzw. 3a) mittels eines elektrisch leitfähigen Klebers kontaktiert sind.

5. Datenträger nach einem der Ansprüche 2 bis 4, **dadurch gekennzeichnet, dass** die beiden einander gegenüberliegenden Spulenteile (2a, 2b) des weiteren durch eine auf der Oberfläche der Trägerschicht (1) verlaufenden Leiterbahn (13) miteinander verbunden sind.

6. Datenträger nach Anspruch 5, **dadurch gekennzeichnet, dass** die Leiterbahn (13) im Bereich der Faltlinie (4) rechtwinklig zur Faltlinie (4) verläuft.

7. Datenträger nach einem der Ansprüche 2 bis 6, **dadurch gekennzeichnet, dass** zumindest eine der beiden einander gegenüberliegenden Spulenteile (2a, 2b) zumindest an den Stellen (5,10) durch eine Isolierschicht abgedeckt ist, an denen die Spulenteile (2a, 2b) ansonsten unmittelbar aufeinanderliegen würden.

8. Datenträger nach Anspruch 7, **dadurch gekennzeichnet, dass** die Isolierschicht eine Schutzlackschicht (11) umfasst.

9. Datenträger nach Anspruch 7 oder 8, **dadurch gekennzeichnet, dass** die Isolierschicht die Zwischenschicht (1c) umfasst.

10. Datenträger nach einem der Ansprüche 2 bis 6, **gekennzeichnet durch** eine Aussparung (7) in der Zwischenschicht (1c), **durch** die hindurch die beiden Spulenteile (2a, 2b) miteinander kontaktiert sind.

11. Datenträger nach einem der Ansprüche 2 bis 6, **dadurch gekennzeichnet, dass** die zwischen die gefaltete Trägerschicht (1) geklappte Zwischenschicht (1c) sich nur teilweise in den durch die Faltung erzeugten Zwischenraum erstreckt und einen Bereich freilässt, in dem die beiden Spulenteile (2a, 2b) miteinander kontaktiert sind.

12. Datenträger nach einem der Ansprüche 2 bis 11, **dadurch gekennzeichnet, dass** die Trägerschicht (1) eine Papier- oder Papplage ist.

13. Datenträger nach einem der Ansprüche 2 bis 12, **dadurch gekennzeichnet, dass** die Trägerschicht (1) eine Kunststofffolie ist.

14. Verwendung eines Datenträgers nach einem der Ansprüche 2 bis 13 als Ausweis, insbesondere Fahrkarte, Eintrittskarte, Personalausweis und Reisepass, oder als Sicherheitsetikett oder -anhänger.

15. Verwendung eines Datenträgers nach einem der Ansprüche 2, bis 14 als Geldkarte, insbesondere Kreditkarte oder dergleichen.

16. Verfahren zum Herstellen eines mehrschichtigen elektronischen Datenträgers mit mindesten einer Transponderspule (2) für den kontaktlosen Daten- und/oder Energietransfer, umfassend eine Trägerschicht (1) mit einer Oberfläche auf der zumindest zwei Spulenteile (2a, 2b) der Transponderspule (2) angeordnet sind, mit den folgenden Schritten:
- Falten der Trägerschicht (1) derart, dass die beiden Spulenteile (2a, 2b) auf einander gegenüberliegenden Innenseiten der gefalteten Trägerschicht liegen, und
- Kontaktieren der beiden Spulenteile (2a, 2b) durch den durch die Faltung erzeugten Zwischenraum hindurch, **gekennzeichnet durch**
- Klappen eines Teils der Trägerschicht (1) zwischen die gefaltete Trägerschicht (1), so daß der Teil der Trägerschicht eine separate isolierende Zwischenschicht (1c) bildet.

17. Verfahren nach Anspruch 16, **dadurch gekennzeichnet, dass** die beiden einander gegenüberliegenden Spulenteile (2a, 2b) jeweils mindestens eine Kontaktzone (3a, 3b) aufweisen und dass beim Schritt des Kontaktierens der beiden Spulenteile ein Berührungskontakt zwischen den Kontaktzonen (3a, 3b) hergestellt wird.

18. Verfahren nach Anspruch 16 oder 17, **dadurch gekennzeichnet; dass** die beiden einander gegenüberliegenden Spulenteile (2a, 2b) jeweils mindestens eine Kontaktzone (3a, 3b) aufweisen, von denen mindestens eine mit einem elektrisch leitfähigen Kleber zum Zweck des Kontaktierens der beiden Spulenteile versehen wird.

19. Verfahren nach einem der Ansprüche 16 bis 18, **dadurch gekennzeichnet, dass** auf der Oberfläche der Trägerfolie eine die beiden einander gegenüberliegenden Spulenteile (2a, 2b) verbindende Leiterbahn (13) vorgesehen wird.

20. Verfahren nach Anspruch 19, **dadurch gekennzeichnet, dass** die Leiterbahn (13) im Bereich der Faltlinie (4) rechtwinklig zur Faltlinie (4) ausgerichtet wird.

21. Verfahren nach einem der Ansprüche 16 bis 20, **dadurch gekennzeichnet, dass** zumindest eine der beiden einander gegenüberliegenden Spulenteile (2a, 2b) zumindest an den Stellen (5, 10) mit einer Isolierschicht (1c, 11) abgedeckt wird, an denen die Spulenteile (2a, 2b) ansonsten unmittelbar aufeinanderliegen würden.

22. Verfahren nach Anspruch 21, **dadurch gekennzeichnet, dass** die Isolierschicht zumindest teilweise als Schutzlackschicht (11) ausgebildet wird.

23. Verfahren nach Anspruch 21, **dadurch gekennzeichnet, dass** die Isolierschicht zumindest teilweise in Form einer separaten Zwischenschicht (1c) vorgesehen wird.

24. Verfahren nach einem der Ansprüche 16 bis 20, **dadurch gekennzeichnet, dass** in der Zwischenschicht (1c) eine Aussparung (7) vorgesehen ist, durch die hindurch die beiden Spulenteile (2a, 2b) miteinander kontaktiert werden.

25. Verfahren nach einem der Ansprüche 16 bis 20, **dadurch gekennzeichnet, dass** die Zwischenschicht (1c) derart zwischen die gefaltete Trägerschicht geklappt wird, daß sie sich nur teilweise in den durch die Faltung erzeugten Zwischenraum erstreckt und **dadurch** einen Bereich freiläßt, in welchem die beiden Spulenteile (2a, 2b) miteinander kontaktiert werden.

## Claims

1. A semifinished product for producing a data carrier comprising a carrier layer (1) with a surface, on which at least two coil parts (2a, 2b) of a transponder coil (2) are disposed, wherein the carrier layer (1) is folded in such a way that the two coil parts (2a, 2b) lie on mutually opposing inner sides of the folded carrier layer 1, wherein the two coil parts are contacted to each other through a space formed by the folding, **characterized in that** a separate insulating intermediate layer (1c) is formed by a part of the carrier layer (1) that is tilted in between the folded carrier layer (1).

2. A multilayer electronic data carrier containing a semifinished product according to claim 1, with at least one transponder coil (2) for the contactless data transfer and/or energy transfer, comprising a carrier layer (1) with a surface, on which at least two coil parts (2a, 2b) of the transponder coil (2) are disposed, wherein the carrier layer (1) is folded in such a way that the two coil parts (2a, 2b) lie on mutually opposing inner sides of the folded carrier layer (1) and the two coil parts (2a, 2b) are contacted to each other through the space formed by the folding, **characterized in that** a separate insulating intermediate layer (1c) is formed by a part of the carrier layer (1) that is tilted in between the folded carrier layer (1).

3. The data carrier according to claim 2, **characterized in that** the two mutually opposing coil parts (2a, 2b) each have at least one contact zone (3a or 3b), which set up a touching contact with a contact zone (3b or 3a) of the respective other coil part.

4. The data carrier according to claim 2 or 3, **characterized in that** the two mutually opposing coil parts (2a, 2b) have at least one contact zone (3a or 3b), which is contacted with a contact zone of the respective other coil part (3b or 3a) via an electrically conductive adhesive.

5. The data carrier according to any of claims 2 to 4, **characterized in that** the two mutually opposing coil parts (2a, 2b) are additionally connected to each other by a conductive path (13) extending on the surface of the carrier layer (1).

6. The data carrier according to claim 5, **characterized in that** in the area of the folding line (4) the conductive path (13) extends at right angles to the folding line (4).

7. The data carrier according to any of claims 2 to 6, **characterized in that** at least one of the two mutually opposing coil parts (2a, 2b) is covered by an insulating layer at least at the positions (5, 10), where otherwise the coil parts (2a, 2b) would lie directly one on top of the other.

8. The data carrier according to claim 7, **characterized in that** the insulating layer comprises a protective lacquer layer (11).

9. The data carrier according to claim 7 or 8, **characterized in that** the insulating layer comprises the intermediate layer (1c).

10. The data carrier according to any of claims 2 to 6, **characterized by** a gap (7) in the intermediate layer (1c), through which the two coil parts (2a, 2b) are contacted to each other.

11. The data carrier according to any of claims 2 to 6, **characterized in that** the intermediate layer (1c) tilted in between the folded carrier layer (1) only partially extends into the space produced by the folding and leaves an area free, in which the two coil parts (2a, 2b) are contacted to each other.

12. The data carrier according to any of claims 2 to 11, **characterized in that** the carrier layer (1) is a paper or cardboard layer.

13. The data carrier according to any of claims 2 to 12, **characterized in that** the carrier layer (1) is a plastic foil.

14. A use of a data carrier according to any of claims 2 to 13 as an identification document, in particular travel ticket, admission ticket, identity card and passport, or as a security label or security tag.

15. A use of a data carrier according to any of claims 2 to 14 as a money card, in particular credit card or the like.

16. A method for producing a multilayer electronic data carrier with at least one transponder coil (2) for the contactless data transfer and/or energy transfer, comprising a carrier layer (1) with a surface on which at least two coil parts (2a, 2b) of the transponder coil (2) are disposed, comprising the following steps:
- folding the carrier layer (1) in such a way that the two coil parts (2a, 2b) lie on mutually opposing inner sides of the folded carrier layer, and
- contacting the two coil parts (2a, 2b) through the space produced by the folding, **characterized by**
- tilting a part of the carrier layer (1) in between the folded carrier layer (1), so that the said part of the carrier layer forms a separate insulating intermediate layer (1c).

17. The method according to claim 16, **characterized in that** the two mutually opposing coil parts (2a, 2b) each have at least one contact zone (3a, 3b) and that during the step of contacting the two coil parts a touching contact is set up between the contact zones (3a, 3b).

18. The method according to claim 16 or 17, **characterized in that** the two mutually opposing coil parts (2a, 2b) each have at least one contact zone (3a, 3b), at least one of which is provided with an electrically conductive adhesive for the purpose of contacting the two coil parts.

19. The method according to any of claims 16 to 18, **characterized in that** on the surface of the carrier foil is provided a conductive path (13) connecting the two mutually opposing coil parts (2a, 2b).

20. The method according to claim 19, **characterized in that** in the area of the folding line (4) the conductive path (13) is aligned at right angles to the folding line (4).

21. The method according to any of claims 16 to 20, **characterized in that** at least one of the two mutually opposing coil parts (2a, 2b) is covered with an insulating layer (1c,11) at least at the positions (5, 10), where otherwise the coil parts (2a, 2b) would lie directly one on top of the other.

22. The method according to claim 21, **characterized in that** the insulating layer at least partially is formed as a protective lacquer layer (11).

23. The method according to claim 21, **characterized in that** the insulating layer is provided at least partially in the form of a separate intermediate layer (1c).

24. The method according to any of claims 16 to 20, **characterized in that** in the intermediate layer (1c) is provided a gap (7), through which the two coil parts (2a, 2b) are contacted to each other.

25. The method according to any of claims 16 to 20, **characterized in that** the intermediate layer (1c) is tilted in between the folded carrier layer in such a way that it only partially extends into the space produced by the folding and thus leaves an area free, in which the two coil parts (2a, 2b) are contacted to each other.

## Revendications

1. Semi-produit pour la fabrication d'un support de données, comprenant une couche porteuse (1) qui présente une surface sur laquelle sont disposées au moins deux parties de bobine (2a, 2b) appartenant à une bobine de transpondeur (2), la couche porteuse (1) étant pliée de telle manière que les deux parties de bobine (2a, 2b) se trouvent sur des côtés intérieurs opposés face à face de la couche porteuse pliée (1), les deux parties de bobine étant mises en contact entre elles à travers un espace intermédiaire formé par le pliage, **caractérisé en ce qu'**une couche intermédiaire isolante séparée (1c) est formée par une partie de la couche porteuse (1) qui est rabattue entre des parties de la couche porteuse pliée (1).

2. Support de données électronique multicouche comprenant un semi-produit selon la revendication 1 qui possède au moins une bobine de transpondeur (2) pour le transfert de données et/ou d'énergie sans contact, comprenant une couche porteuse (1) qui présente une surface sur laquelle sont disposées au moins deux parties de bobine (2a, 2b) appartenant à la bobine de transpondeur (2), la couche porteuse (1) étant pliée de telle manière que les deux parties de bobine (2a, 2b) se trouvent sur des côtés intérieurs opposés face à face de la couche porteuse pliée (1) et les deux parties de bobine (2a, 2b) sont mises en contact entre elles à travers l'espace l'intermédiaire formé par le pliage, **caractérisé en ce qu'**une couche intermédiaire isolante séparée (1c) est formée par une partie de la couche porteuse (1) qui est rabattue entre les parties de la couche porteuse pliée (1).

3. Support de données selon la revendication 2, **caractérisé en ce que** les deux parties de bobine mutuellement opposées (2a, 2b) présentent chacune au moins une zone de contact (3a ou 3b) qui établit un contact électrique par contact physique avec une zone de contact (3b ou 3a) de l'autre partie de bobine.

4. Support de données selon la revendication 2 ou 3, **caractérisé en ce que** les deux parties de bobine (2a, 2b) opposées face à face présentent au moins une zone de contact (3a ou 3b) qui est mise en contact avec une zone de contact de l'autre partie de bobine (3b ou 3a) au moyen d'une colle conductrice de l'électricité.

5. Support de données selon une des revendications 2 à 4, **caractérisé en ce que** les deux parties de bobine (2a, 2b) opposées face à face sont par ailleurs reliées entre elles par une piste conductrice (13) qui s'étend sur la surface de la couche porteuse (1).

6. Support de données selon la revendication 5, **caractérisé en ce que**, dans la région de la ligne de pliage (4), la piste conductrice (13) s'étend perpendiculairement à la ligne de pliage (4).

7. Support de données selon une des revendications 2 à 6, **caractérisé en ce qu'**au moins une des deux parties de bobine (2a, 2b) opposées face à face est recouverte d'une couche isolante au moins dans les zones (5, 10) dans lesquelles, autrement, les parties de bobine (2a, 2b) reposeraient directement l'une sur l'autre.

8. Support de données selon la revendication 7, **caractérisé en ce que** la couche isolante comprend une couche de laque protectrice (11).

9. Support de données selon la revendication 7 ou 8, **caractérisé en ce que** la couche isolante comprend la couche intermédiaire (1c).

10. Support de données selon une des revendications 2 à 6, **caractérisé par** un évidement (7) ménagé dans la couche intermédiaire (1c), à travers lequel les deux parties de bobine (2a, 2b) sont mises en contact entre elles.

11. Support de données selon une des revendications 2 à 6, **caractérisé en ce que** la couche intermédiaire (1c) rabattue entre les parties de la couche porteuse pliée (1) ne s'étend que partiellement dans l'espace intermédiaire produit par le pliage et laisse libre une région dans laquelle les deux parties de bobine (2a, 2b) sont mises en contact entre elles.

12. Support de données selon une des revendications 2 à 11, **caractérisé en ce que** la couche porteuse (1) est une couche de papier ou de carton.

13. Support de données selon une des revendications 2 à 12, **caractérisé en ce que** la couche porteuse (1) est une feuille en matière plastique.

14. Utilisation d'un support de données selon, une des revendications 2 à 13 en tant qu'attestation, en particulier titre de transport, carte d'entrée, carte d'identité et passeport ou encore étiquette ou fiche de sécurité.

15. Utilisation d'un support de données selon une des revendications 2 à 14 en tant que carte bancaire, en particulier carte de crédit ou analogue.

16. Procédé de fabrication d'un support de données électronique multicouche comprenant au moins une bobine de transpondeur (2) pour le transfert de données et/ou d'énergie sans contact, comprenant une couche porteuse (1) ayant une surface sur laquelle sont disposées au moins deux paries de bobine (2a, 2b) appartenant à la bobine de transpondeur (2), qui comprend les étapes suivantes :
- pliage de la couche porteuse (1) de manière que les deux parties de bobine (2a, 2b) se trouvent sur des côtés intérieurs opposés face à face de la couche porteuse pliée, et
- mise en contact des deux parties de bobine (2a, 2b) à travers l'espace intermédiaire produit par le pliage, **caractérisé par** :
- le rabattement d'une partie de la couche porteuse (1) entre les parties de la couche porteuse (1) pliée de telle manière que la partie de la couche porteuse forme une couche intermédiaire isolante séparée (1c).

17. Procédé selon la revendication 16, **caractérisé en ce que** les deux parties de bobine (2a, 2b) opposées face à face présentent chacune au moins une zone de contact (3a, 3b) et **en ce que**, lors de l'étape de mise en contact des deux parties de bobine, il s'établisse un contact électrique par contact physique entre les deux zones de contact (3a, 3b).

18. Procédé selon une la revendication 16 ou 17, **caractérisé en ce que** les deux parties de bobine (2a, 2b) opposées face à face présentant chacune au moins une zone de contact (3a, 3b) dont au moins une est munie d'une colle conductrice de l'électricité pour la mise en contact des deux parties de bobine.

19. Procédé selon une des revendications 16 à 18, **caractérisé en ce qu'**on prévoit sur la surface de la feuille porteuse une piste conductrice (13) qui relie les deux parties de bobine (2a, 2b) opposées face à face.

20. Procédé selon la revendication 19, **caractérisé en ce que**, dans la région de la ligne de pliage (4), la piste conductrice (13) est orientée perpendiculairement à la ligne de pliage (4).

21. Procédé selon une des revendications 16 à 20, **caractérisé en ce qu'**au moins une des deux parties de bobine (2a, 2b) opposées face à face est recouverte d'une couche isolante (1c, 11) au moins dans les zones (5, 10) dans lesquelles, autrement, les deux parties de bobine (2a, 2b) reposeraient directement l'une sur l'autre.

22. Procédé selon la revendication 21, **caractérisé en ce que** la couche isolante est réalisée au moins en partie sous la forme d'une couche de laque protectrice (11).

23. Procédé selon la revendication 21, **caractérisé en ce que** la couche isolante est prévue au moins partiellement sous la forme d'une couche intermédiaire séparée (1c).

24. Procédé selon une des revendications 16 à 20, **caractérisé en ce que**, dans la couche intermédiaire (1c) est ménagé un évidement (7) à travers lequel les deux parties de bobine (2a, 2b) sont mises en contact entre elles.

25. Procédé selon une des revendications 16 à 20, **caractérisé en ce que** la couche intermédiaire (1c) est rabattue entre des parties de la couche porteuse pliée de telle manière qu'elle ne s'étende que partiellement dans l'espace intermédiaire produit par le pliage et qu'ainsi, elle laisse libre une région dans laquelle les deux parties de bobine (2a, 2b) sont mises en contact entre elles.
